# DEMANDE DE BREVET EUROPEEN

(11) **EP 3 518 585 A1**
(43) Date de publication de la demande: **31.07.2019**
(21) Numéro de dépôt: 19154263.8
(22) Date de dépôt: 29.01.2019
(51) Int. Cl.: H04W 48/18, H04W 8/20

(54) **PROCÉDÉ DE GESTION DES ACCÈS À UNE INFRASTRUCTURE DE TÉLÉCOMMUNICATION COMPRENANT DES RÉSEAUX PUBLICS ET PRIVÉS ET DISPOSITIFS ASSOCIÉS**

(30) Priorité: 30.01.2018 FR 1800095
(71) Demandeur: Thales, 92400 Courbevoie (FR)
(72) Inventeur: BITTARD, Anne, 92622 GENNEVILLIERS (FR); BLONDEZ, Jérôme, 59130 LAMBERSART (FR)
(74) Mandataire: Lavoix

(57) **Abrégé**

L'invention concerne un procédé de gestion des accès à une infrastructure de télécommunication (10) comprenant :
- des réseaux de télécommunication (12), un réseau étant public et un réseau étant privé, et
- un terminal mobile (14) comportant un dispositif d'attachement (18) et étant propre à s'attacher à chaque réseau (12) selon un profil spécifique,
le procédé comportant:
- une demande d'attachement du terminal (14) à un deuxième réseau (12_{B}) distinct du premier réseau auquel le terminal (14) est attaché selon un premier profil,
- test de la réalisation de la mise à jour du profil de services associé au deuxième profil, le terminal (14) restant attaché au deuxième réseau (12) si l'attachement au deuxième réseau et la mise à jour ont été réalisés et le terminal (14) s'attachant au premier réseau si l'attachement au deuxième réseau et la mise à jour n'ont pas été réalisés.

## Description

La présente invention concerne un procédé de gestion des accès à une infrastructure de télécommunication. La présente invention se rapporte également à un produit programme d'ordinateur, un support lisible d'informations et une infrastructure associés.

Pour l'ensemble des sigles dans la description qui suit, le lecteur est invité à se reporter à la partie LEXIQUE.

Pour accéder à des services de téléphonie mobile, tels des appels mobiles, l'échange de messages ou l'accès à Internet, un utilisateur utilise un terminal mobile dans laquelle est installé un dispositif d'attachement, comprenant généralement une carte SIM fournie par le MNO de l'utilisateur, pour accéder au réseau dudit MNO.

Toutefois, dans une infrastructure comportant une coexistence de plusieurs réseaux mobiles, la gestion de l'accès aux réseaux par un terminal mobile capable d'utiliser de multiples profils réseau est souvent délicate à gérer.

Pour une telle gestion, il est connu de changer de profil réseau par choix et paramétrage du réseau autorisé en fonction de critères économiques ou géographiques par exemple. Dans un tel cas, c'est le MNO qui effectue le changement profil sur demande de l'utilisateur, et les réseaux utilisables sont limités à ceux supportés par le MNO.

Il est aussi connu de changer de profil réseau par une souscription via internet. Dans un tel cas, c'est l'utilisateur qui effectue le changement profil mais pas directement depuis le terminal mobile.

Il est aussi connu d'utiliser un menu SIM Toolkit accessible à l'utilisateur du téléphone, lui permettant de basculer manuellement de profil.

Cependant, ces solutions ne traitent pas de la gestion des effets de bord induits par un changement de profil réseau, à savoir les modifications nécessaires des paramètres de services associés au profil réseau dans le terminal et la carte SIM (par exemple, saisie du code de contrôle de sécurité, paramétrage des APN, changement de technologie de fonctionnement du terminal mobile ou autres paramètres configurés dans le terminal pour l'accès aux services applicatifs), considérant que cette gestion est du ressort du terminal mobile ou de l'utilisateur, et ne permettent pas à l'utilisateur de changer de profil en temps réel en fonction de la disponibilité des réseaux.

Une autre manière d'implémenter un accès alternatif à plusieurs réseaux est d'utiliser des terminaux multi-SIM.

Mais, à nouveau, des actions manuelles de l'utilisateur sont nécessaires, et les spécificités des réseaux et services privés ne sont pas prises en compte.

Une autre manière d'implémenter un accès alternatif à plusieurs réseaux est d'utiliser des terminaux équipés d'une carte SIM multi-IMSI. Une application SIM gère la bascule d'IMSI sur détection d'un critère.

Néanmoins une telle implémentation n'utilise pas des profils SIM indépendants pour des services de communications sur des réseaux d'accès opérés par des acteurs MNO indépendants, elle reste sous le contrôle exclusif du MNO.

Les implémentations précédentes ne sont pas optimisées pour un service et une infrastructure comportant une coexistence de réseaux publics et privés. Or une mauvaise étanchéité des droits d'accès entre ces deux types de réseaux peut conduire à l'accès à un réseau privé d'un profil non autorisé ou inversement. Par ailleurs il doit pouvoir être possible de gérer et faire évoluer les réseaux privés indépendamment des réseaux publics, et de modifier si besoin le choix des réseaux publics qui sont utilisés en complément desdits réseaux privés. Enfin, les paramètres de services entre un réseau privé et un réseau opéré peuvent différer fortement, pouvant nécessiter des actions de configuration manuelle du terminal ou de saisie de données par l'utilisateur lors de chaque changement de réseau.

La problématique de la perte d'accès radio ou de la dégradation de l'accès à des services mobiles est particulièrement dérangeante lorsque les utilisateurs sont, par exemple, des agents de forces de sécurité, des policiers, des pompiers, ou des exploitants d'équipements critiques. De tels utilisateurs, par leurs fonctions, ont le besoin de disposer de services mobiles présentant une bonne résilience, c'est-à-dire présentant la capacité de continuer à fonctionner en cas de dégradation ou de panne. Lesdits utilisateurs déploient souvent pour leurs besoins propres des réseaux radio privés sur leur zone principale d'intervention. En complément, les utilisateurs ont donc un intérêt à y associer les services de réseaux publics ou d'autres réseaux privés. Or, ces différents réseaux utilisent non seulement des composants d'authentification et de contrôle d'accès au réseau distincts (HSS, carte SIM), mais aussi des paramètres de sécurité (par exemple le code PIN de la carte SIM) et de services (par exemple, APN, numéro ou adresse d'un serveur...) qui leur sont propres et qui doivent être saisis, configurés, désactivés ou activés en fonction du changement de réseau. Ces acteurs ont alors besoin d'un procédé qui fournisse un service rendant le changement de réseau le plus simple, rapide et transparent possible pour l'utilisateur, et qui ne dépende pas d'échanges en temps réel et permanents avec un serveur, mais qui puisse être exécuté localement au terminal même en cas d'absence de connectivité de données mobiles.

Il existe donc un besoin pour un procédé de gestion des accès à une infrastructure de télécommunication comportant des réseaux publics et privés garantissant une bonne étanchéité entre les profils réseau et qui soit de mise en oeuvre simple, automatisée et indépendante des réseaux.

Pour cela, la présente description porte sur un procédé de la gestion des accès à une infrastructure de télécommunication, l'infrastructure de télécommunication comprenant des réseaux de télécommunication, au moins un réseau étant un réseau public et au moins un réseau étant un réseau privé, et un terminal mobile comportant un dispositif d'attachement et un contrôleur, le terminal mobile étant propre à s'attacher à chaque réseau selon un profil réseau spécifique, les profils réseau autorisés étant mémorisés dans le dispositif d'attachement, un profil de services étant associé à chaque dispositif d'attachement et à chaque profil réseau. Le procédé comportant au moins l'étape de demande d'attachement du terminal mobile à un deuxième réseau distinct du premier réseau auquel le terminal mobile est attaché selon un premier profil réseau, de désactivation du premier profil réseau par le contrôleur, de sélection du deuxième profil réseau par le contrôleur, d'attachement au deuxième réseau, de demande de mise à jour du profil de services, et de test de la réalisation de la mise à jour du profil de services associé au deuxième profil réseau, le terminal mobile restant attaché au deuxième réseau avec le profil de services du deuxième réseau si l'attachement au deuxième réseau et la mise à jour ont été réalisés et le terminal mobile s'attachant au premier réseau avec le profil de services du premier réseau si l'attachement au deuxième réseau et la mise à jour n'ont pas été réalisés.

Suivant des modes de réalisation particuliers, le procédé comprend une ou plusieurs des caractéristiques suivantes, prise(s) isolément ou suivant toutes les combinaisons techniquement possibles :
- lors de l'étape de sélection, une saisie automatique d'un code a lieu.
- le procédé comporte une étape de renvoi d'une erreur si la mise à jour de paramètres de service n'a pas été réalisée et si le terminal mobile n'a pas pu s'attacher au nouveau réseau.
- la demande d'attachement est une prise de décision en fonction de critères.
- un réseau de télécommunication est un réseau choisi parmi un réseau LTE, un réseau 2G de type public, un réseau 3G de type public, un réseau 4G de type public, un réseau 2G de type privé, un réseau 3G de type privé et un réseau 4G de type privé.
- le procédé comporte une étape de mesure de qualité de service par le contrôleur.
- le dispositif d'attachement est une carte SIM et le contrôleur est une application mobile.
- le dispositif d'attachement est une carte SIM de type eUICC configurée avec plusieurs profils réseau eUSIM indépendants, et disposant d'une interface de communication qui permet au contrôleur de déclencher un changement de profil réseau par échange de commandes avec le dispositif d'attachement.
- l'infrastructure de télécommunication comporte un dispositif de gestion gérant l'accès aux réseaux par des profils réseau autorisés pour chaque dispositif d'attachement et les profils de services applicables à chaque profil de réseau considéré et communiquant avec le dispositif de contrôle, la gestion pouvant être asynchrone, le dispositif de gestion fonctionnant indépendamment des opérateurs de réseau de télécommunication.
- le contrôleur est apte à fonctionner localement au terminal mobile, c'est-à-dire même en l'absence temporaire de connexion avec le dispositif de gestion.

La présente description se rapporte également à un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé tel que précédemment décrit.

La présente description concerne aussi un support lisible d'informations mémorisant un programme d'ordinateur comprenant des instructions de programme, le programme d'ordinateur étant chargeable sur une unité de traitement de données et adapté pour entraîner la mise en oeuvre d'un procédé tel que précédemment décrit lorsque le programme d'ordinateur est mis en oeuvre sur l'unité de traitement des données.

La présente description se rapporte aussi à une infrastructure de télécommunication comprenant des réseaux de télécommunication, au moins un réseau étant un réseau public et au moins un réseau étant un réseau privé, et un terminal mobile comportant un dispositif d'attachement et un contrôleur, le terminal mobile étant propre à s'attacher à chaque réseau selon un profil spécifique, les profils réseau spécifiques étant mémorisés dans le dispositif d'attachement, un profil de services étant associé à chaque dispositif d'attachement et à chaque profil réseau. L'infrastructure de télécommunication est adaptée à mettre en oeuvre un procédé de gestion des accès à l'infrastructure de télécommunication, au moins l'étape de demande d'attachement du terminal mobile à un deuxième réseau distinct du premier réseau auquel le terminal mobile est attaché selon un premier profil réseau, de désactivation du premier profil réseau par le contrôleur, de sélection du deuxième profil réseau par le contrôleur, d'attachement au deuxième réseau, de demande de mise à jour du profil de services, et de test de la réalisation de la mise à jour du profil de services associé au deuxième profil réseau, le terminal mobile restant attaché au deuxième réseau avec le profil de services du deuxième réseau si l'attachement au deuxième réseau et la mise à jour ont été réalisés et le terminal mobile s'attachant au premier réseau avec le profil de services du premier réseau si l'attachement au deuxième réseau et la mise à jour n'ont pas été réalisés.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une représentation schématique d'une infrastructure de télécommunication, et
- figure 2, un ordinogramme illustrant un exemple de mise en oeuvre d'un procédé de gestion des accès à l'infrastructure de la figure 1.

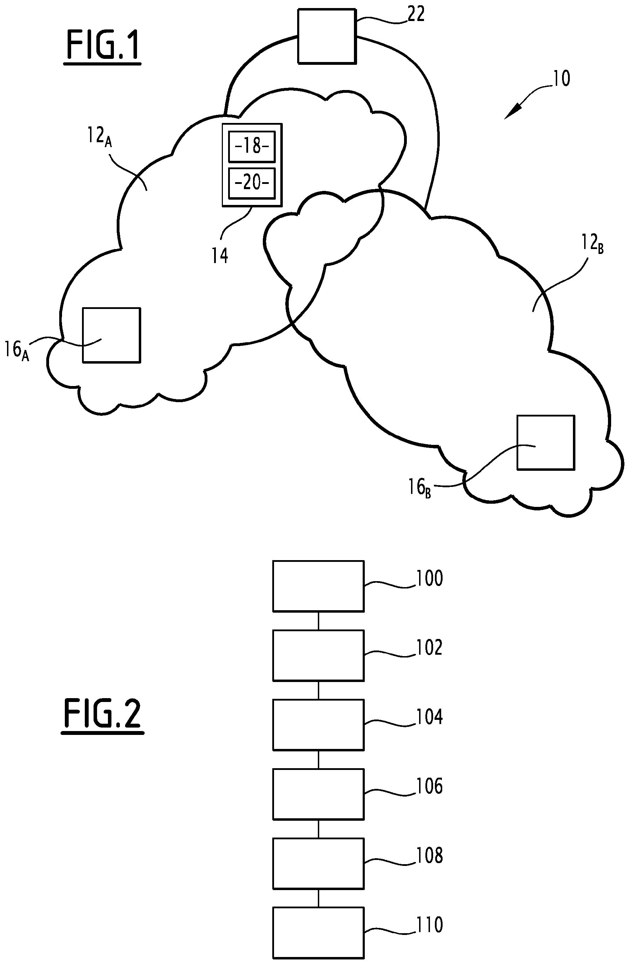

La figure 1 illustre une infrastructure de télécommunication 10.

L'infrastructure de télécommunication 10 comprend des réseaux de télécommunication 12, un terminal mobile 14 et un dispositif de gestion 22.

Selon l'exemple illustré, les réseaux 12 appartiennent à des MNO qui sont tous différents entre eux.

Dans le cas de la figure 1, l'infrastructure 10 comprend un premier réseau 12_{A} et un deuxième réseau 12_{B} deux MNO distincts entre eux, notés MNO_{A} et MNO_{B}.

Le premier réseau 12_{A} est un réseau public alors que le deuxième réseau 12_{B} est un réseau privé.

Plus généralement, les réseaux de télécommunication 12 comportent au moins un réseau public et au moins un réseau privé, le nombre de chaque réseau pouvant être strictement supérieur à 1.

Chaque réseau 12 est, par exemple, propre à mettre en oeuvre des protocoles ou standards de télécommunication du type 2G, 3G, 4G et suivants.

A titre d'exemple particulier, un des réseaux de télécommunication 12 est un réseau PMR privé reposant sur le standard de télécommunication 4G, et un autre des réseaux de télécommunication 12 est un réseau public national reposant sur les standards 2G, 3G et 4G.

Chaque réseau 12 est relié à l'équipement de contrôle d'accès 16 qui est propre à gérer l'authentification et le contrôle d'accès du terminal mobile 14 audit réseau 12 pour la mise en oeuvre de services mobiles.

L'équipement de contrôle d'accès 16, également désigné par le sigle HSS, comprend une base de données.

Le HSS 16 est propre à mémoriser, pour chaque utilisateur muni d'un terminal mobile 14, un registre de réseaux autorisés comprenant un ou plusieurs réseaux 12.

Dans la figure 1, deux HSS 16_{A} et 16_{B} (un par réseau 12) sont représentés.

Par « réseau autorisé », il est entendu un réseau 12 auquel le terminal mobile 14 est en mesure de s'attacher à partir d'un profil réseau PR prédéterminé incluant un ou plusieurs IMSI associés. Dit autrement, un réseau 12 autorisé désigne un réseau 12 sur lequel le terminal mobile 14 est susceptible d'être enregistrée avec un IMSI appartenant à un profil réseau PR pour pouvoir s'y attacher.

Dans le présent mode de réalisation, le registre de réseaux autorisés contient, pour chaque utilisateur muni d'un terminal mobile 14, un profil réseau PR_{A} associé au premier réseau 12_{A} et un autre profil réseau PR_{B} associé au deuxième réseau 12_{B}.

Le terminal mobile 14 comporte un dispositif d'attachement 18 et un contrôleur 20.

Le terminal mobile 14 est propre à s'attacher à chaque réseau 12_{A} et 12_{B} selon un profil réseau PR_{A} ou PR_{B} spécifique à ce réseau 12.

Par « attachement », il est fait référence aux procédures décrites par les normes de télécommunication et qui consistent à identifier puis à authentifier un terminal mobile 14 au sein d'un réseau 12.

Chaque profil réseau spécifique PR_{A} ou PR_{B} est mémorisé dans le dispositif d'attachement 18.

En outre, chaque dispositif d'attachement 18 est associé à une liste de profils réseau PR accessibles, et chaque profil réseau PR_{A} ou PR_{B} est associé à un profil de services recensant les paramètres de services à utiliser pour la connexion au réseau 12 considéré via le profil réseau PR considéré.

Selon un exemple particulier, le terminal mobile 14 est un téléphone ou un ordiphone, le dispositif d'attachement 18 est une carte SIM et le contrôleur 20 est une application mobile mise en oeuvre par le téléphone. L'application mobile est propre à être installée sur le terminal mobile 14 avec un système d'exploitation, par exemple de type Android.

Une carte SIM 18 est une puce contenant un microcontrôleur et de la mémoire.

La carte SIM 18 est propre à gérer des réseaux 12 autorisés, c'est-à-dire des réseaux 12 figurant dans le registre de réseaux autorisés mémorisé dans le HSS 16.

La carte SIM 18 est une puce qui comprend un microcontrôleur et une mémoire, et qui est propre à mémoriser des informations spécifiques à un utilisateur utilisées pour la mise en oeuvre de l'initiation d'un attachement à un réseau 12.

De façon non limitative, le dispositif d'attachement 18 est une carte eUICC propre à mémoriser plusieurs profils réseau (ou profils eUSIM) associés chacun à un ou plusieurs IMSI, et un ensemble d'informations propres à prouver l'authenticité de chaque IMSI.

Dans un tel cas, le dispositif d'attachement 18 est une carte SIM de type eUICC configurée avec plusieurs profils réseau eUSIM indépendants, et disposant d'une interface de communication qui permet au contrôleur 20 de déclencher un changement de profil réseau PR par échange de commandes avec le dispositif d'attachement 18. L'interface de communication est notamment une interface de communication logicielle.

De façon non limitative, le terminal mobile 14 est propre à mémoriser des paramètres de services propres à un profil réseau PR (par exemple : nom et état d'activation d'un APN, technologie à utiliser par le terminal 14 pour l'accès à ce réseau 12, adresse d'un serveur de communication...).

Le contrôleur 20 est propre à contrôler la carte SIM 18 et notamment à déclencher le basculement entre les profils de la carte SIM 18, et à communiquer avec le terminal mobile 14.

Le dispositif de gestion 22 est propre à administrer le service d'accès à plusieurs réseaux 12 fourni par l'opérateur de services. Le dispositif de gestion 22 permet notamment audit opérateur de services de déclarer et mémoriser les droits d'accès (profils réseau PR accessibles) de l'utilisateur final au service ainsi que les identifiants IMSI et les profils de services applicables à chaque profil réseau PR_{A} ou PR_{B} utilisé, d'administrer à distance le contrôleur 20 (notamment la mise à jour du logiciel, et des droits et paramétrages propres à chaque utilisateur), et de piloter de manière asynchrone le service fourni (notamment le contrôle des droits d'accès au service et la remontée d'événements).

Les échanges entre le dispositif de gestion 22 et le contrôleur 20 sont réalisés via une connexion de données mobiles au travers des réseaux de télécommunication 12. Il est à noter que le dispositif de gestion 22 et le contrôleur 20 sont aptes à fonctionner et à être administrés par l'opérateur de services indépendamment des équipements de contrôle d'accès des opérateurs des réseaux de télécommunication 12 utilisés.

Il est à noter que le contrôleur 20 est apte à fonctionner localement au terminal mobile 14, c'est-à-dire même en l'absence temporaire de connexion avec le dispositif de gestion 22.

Le fonctionnement de l'infrastructure 10 et notamment de la gestion des accès du terminal mobile 14 aux différents réseaux 12_{A} et 12_{B} est maintenant décrit en référence à la figure 2 qui illustre un ordinogramme d'un exemple de mise en oeuvre d'un procédé de gestion des accès à l'infrastructure 10.

Le procédé comporte une étape de demande d'attachement 100, une étape de désactivation 102, une étape de sélection 104, une étape d'attachement 106, une étape de demande de mise à jour 108 et une étape de test 110.

Initialement, le terminal mobile 14 est attaché au premier réseau 12_{A} à partir d'un IMSI₁, associé dans le dispositif d'attachement 18 du premier réseau 12_{A}.

Lors de l'étape de demande d'attachement 100, il est demandé que le terminal mobile 14 s'attache au deuxième réseau 12_{B} auquel le terminal mobile 14 est attaché selon un premier profil réseau PR_{A}.

La demande d'attachement est une prise de décision en fonction de critères.

Par « critère », il est entendu une donnée mesurable sur laquelle est basée la décision de mise en oeuvre d'un basculement d'un premier réseau 12_{A} vers un deuxième réseau 12_{B} distinct du premier réseau 12_{A}.

Les exemples de critères sont multiples. Une liste est donnée ci-après à titre d'exemples non limitatifs :
- l'existence d'une couverture réseau ;
- un niveau minimum de la couverture réseau, par exemple une puissance de réception minimum ;
- un type de services offerts et la disponibilité en temps réel de chacun des services offerts, pouvant être caractérisés en partie par la disponibilité d'une technologie radio particulière, par exemple la disponibilité d'une couverture de données mobiles en 4G ;
- une qualité de service en données mobiles, telle un débit minimum, c'est-à-dire une quantité minimum de paquets envoyés et reçus par unité de temps, et/ou un niveau maximum de latence, c'est-à-dire le temps maximum nécessaire pour transporter un paquet au travers d'un réseau 12, et/ou un niveau maximum de jigue, c'est-à-dire la variabilité maximale du temps nécessaire pour transporter un paquet au travers d'un réseau 12 ;
- des préférences entre les réseaux 12 ;
- la position géographique du terminal mobile 14 ;
- des données de tarification, par exemple des données de tarification propres à chaque réseau 12 autorisé et/ou aux services disponibles sur les réseaux 12,
- une date, un jour de la semaine, et/ou un horaire, et
- une action de l'utilisateur.

Par ailleurs, certains critères sont paramétrables soit par l'opérateur de services, soit par l'utilisateur.

Pour l'exemple proposé, le critère correspond à la mesure de la qualité de service, cette mesure étant réalisée périodiquement par le contrôleur 20.

Par exemple, le débit de données mobiles est mesuré périodiquement pour s'assurer qu'il reste supérieur à un seuil, par exemple fixé à 10 kbit/s.

Lors de l'étape de désactivation 102, le contrôleur 20 désactive le premier profil réseau PR_{A}.

Puis, lors de l'étape de sélection 104, le contrôleur 20 sélectionne et active le deuxième profil réseau PR_{B}, et réalise si nécessaire la saisie automatique du code de contrôle de sécurité associé au deuxième profil réseau PR_{B}.

Lors de l'étape d'attachement 106, le terminal mobile 14 s'attache au deuxième réseau 12_{B}.

Une demande de mise à jour du deuxième profil de services est alors effectuée.

La mise à jour n'est effectuée que si le deuxième profil de services est considéré comme valable et mis en oeuvre avec succès dans le terminal mobile 14, et si le deuxième profil réseau PR_{B} possède une autorisation d'accès au deuxième réseau 12_{B}.

Lors de l'étape de test 108, il est testé si la mise à jour du deuxième profil a bien été réalisée à la suite de la demande de mise à jour du deuxième profil et si le terminal mobile 14 a pu s'attacher avec succès au deuxième réseau 12_{B}.

Si le test est positif, le terminal mobile 14 reste attaché au deuxième réseau 12_{B} et conserve ses paramètres de service associés.

A contrario, si le test est négatif, les paramètres de service associés au premier profil réseau PR_{A} sont rétablis et le terminal mobile 14 s'attache au premier réseau 12_{A}.

Dans le cas où le terminal mobile 14 ne parvient pas à s'attacher au premier réseau 12_{A} une erreur est renvoyée.

Le procédé de gestion décrit présente de nombreux avantages.

Le procédé permet à un opérateur de services de préconfigurer et d'administrer des profils d'abonnement et de service pour permettre une utilisation mixte entre un ou plusieurs réseaux 12 mobiles publics et privés avec des profils réseau indépendants entre eux toute en conservant une gestion centralisée.

Cela permet aussi de prendre en compte les spécificités des réseaux 12 privés, en particulier leur technologie de fonctionnement et leurs paramètres de service spécifiques.

Il est aussi à noter que la mise en oeuvre du procédé est indépendante des services d'un opérateur public ou privé d'accès radio et des programmes du fabricant du terminal mobile 14.

De plus, l'opérateur de services contrôle les droits d'accès de l'utilisateur final au service, et en particulier la facturation du service d'accès multi-réseaux.

Du point de vue de l'utilisateur, le procédé permet de basculer d'un profil à l'autre (donc de réseau 12) de manière simple et automatique, sans besoin de saisie de données complémentaires.

Le procédé ne nécessite pas de connectivité permanente à un serveur, les actions de sélection de réseau 12 mais aussi de reconfiguration de paramètres de services pouvant être exécutées localement au terminal mobile 14.

Le procédé permet ainsi de fournir un service optimisé d'accès à une infrastructure de télécommunication 10 comportant des réseaux 12 publics et privés.

Il est à noter que le procédé diffère d'un procédé de gestion à distance de profils eUSIM par un serveur central, en mode connecté, pour changer un profil réseau puisque le procédé n'utilise pas de tels mécanismes.

En effet, le procédé ne modifie pas en temps réel les profils réseau PR_{A} et PR_{B} précédemment configurés dans le dispositif d'attachement 18, et fonctionne indépendamment des opérateurs des différents réseaux 12, 12_{A}, 12_{B} utilisés, en mode déconnecté, et de manière locale, c'est-à-dire dans le terminal mobile 14. Pour cela, il est utilisé le contrôleur 20 qui dépend d'un opérateur de services qui n'est pas un MNO, en particulier ni le premier MNO, à savoir le MNO_{A} qui gère le premier réseau 12_{A}, ni le deuxième MNO, à savoir le MNO_{B} qui gère le deuxième réseau 12_{B}. Il est ainsi exploité avantageusement l'indépendance de l'opérateur de services par rapport aux MNO, cette exploitation se distinguant des travaux habituels visant à améliorer la gestion des réseaux 12_{A} et 12_{B} au niveau des MNO.

En outre, le procédé garantit une bonne étanchéité entre les réseaux 12_{A} et 12_{B} en termes de gestion et de sécurité, et est de mise en oeuvre plus simple pour l'utilisateur final.

En particulier, le procédé peut être mis en oeuvre par un système et un produit programme d'ordinateur. L'interaction du produit programme d'ordinateur avec le système permet de mettre en oeuvre le procédé de gestion.

Le système est un ordinateur.

Plus généralement, le système est un calculateur électronique propre à manipuler et/ou transformer des données représentées comme des quantités électroniques ou physiques dans des registres du système et/ou des mémoires en d'autres données similaires correspondant à des données physiques dans des mémoires, des registres ou d'autres types de dispositifs d'affichage, de transmission ou de mémorisation.

Le système comporte un processeur comprenant une unité de traitement de données, des mémoires et un lecteur de support d'informations. Le système peut également comprendre un clavier et une unité d'affichage.

Le produit programme d'ordinateur comporte un support lisible d'informations.

Un support lisible d'informations est un support lisible par le système, usuellement par l'unité de traitement de données. Le support lisible d'informations est un médium adapté à mémoriser des instructions électroniques et capables d'être couplé à un bus d'un système informatique.

A titre d'exemple, le support lisible d'informations est une disquette ou disque souple (de la dénomination anglaise de « *floppy disk* »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations est mémorisé un programme d'ordinateur comprenant des instructions de programme.

Le programme d'ordinateur est chargeable sur l'unité de traitement de données et est adapté pour entraîner la mise en oeuvre d'un procédé de gestion.

### LEXIQUE

APN : sigle de « Access Point Name » pour « nom du point d'accès réseau »
GSM (ou 2G) : sigle de « Global System for Mobile Communications » pour « système global pour les communications mobiles » ou pour « groupe spécial mobile »
eUICC : sigle de « Embedded Universal Integrated Circuit Card » » pour « carte de circuit intégré universelle embarquée », une évolution des cartes SIM 4G normalisée par le 3GPP pour les usages embarqués dans les équipements terminaux mobiles, et pouvant inclure dans une carte SIM physique unique plusieurs profils logiques de cartes SIM 4G (eUSIM ou eSIM) gérables de manière indépendante selon l'architecture normalisée eUICC.
eUSIM : sigle de « embedded Universal Subscriber Identity Module» pour « module d'identité du souscripteur universel embarqué »
HSS : sigle de « Home Subscriber Server » pour « serveur central d'abonnés »
IMSI : sigle de « International Mobile Subscriber Identity » pour « identité internationale d'abonné mobile », également appelé numéro d'identification mobile
LTE (ou 4G) : sigle de « Long Term Evolution » pour « évolution long terme »
MNO : sigle de « Mobile Network Operator » pour « opérateur de réseau mobile », qui désigne une compagnie qui possède son propre réseau radio de télécommunication mobile
PMR : sigle de « Private Mobile Radiocommunications » ou « Professional Mobile Radiocommunications » pour « réseau mobile privé de radiocommunication »
SIM : sigle de « Subscriber Identity Module » pour « module d'identification d'abonné »
UMTS (ou 3G) : sigle de « Universal Mobile Telecommunications System » pour « système de télécommunication mobile universel »

## Revendications

1. Procédé de gestion des accès à une infrastructure de télécommunication (10), l'infrastructure de télécommunication (10) comprenant :
- des réseaux de télécommunication (12, 12_{A}, 12_{B}), au moins un réseau (12_{A}) étant un réseau public et au moins un réseau (12_{B}) étant un réseau privé, et
- un terminal mobile (14) comportant un dispositif d'attachement (18) et un contrôleur (20), le terminal mobile (14) étant propre à s'attacher à chaque réseau (12) selon un profil réseau spécifique (PR_{A}, PR_{B}), les profils réseau (PR_{A}, PR_{B}) autorisés étant mémorisés dans le dispositif d'attachement (18), un profil de services étant associé à chaque dispositif d'attachement (18) et à chaque profil réseau (PR_{A}, PR_{B}),
le procédé comportant au moins l'étape de :
- demande d'attachement du terminal mobile (14) à un deuxième réseau (12_{B}) distinct du premier réseau (12_{A}) auquel le terminal mobile (14) est attaché selon un premier profil réseau (PR_{A}),
- désactivation du premier profil réseau (PR_{A}) par le contrôleur (20),
- sélection du deuxième profil réseau (PR_{B}) par le contrôleur (20),
- attachement au deuxième réseau (12),
- demande de mise à jour du profil de services, et
- test de la réalisation de la mise à jour du profil de services associé au deuxième profil réseau (PR_{B}), le terminal mobile (14) restant attaché au deuxième réseau (12) avec le profil de services du deuxième réseau (12_{B}) si l'attachement au deuxième réseau (12_{B}) et la mise à jour ont été réalisés et le terminal mobile (14) s'attachant au premier réseau (12_{A}) avec le profil de services du premier réseau (12_{A}) si l'attachement au deuxième réseau (12_{B}) et la mise à jour n'ont pas été réalisés.

2. Procédé selon la revendication 1, dans lequel, lors de l'étape de sélection, une saisie automatique d'un code a lieu.

3. Procédé selon la revendication 1 ou 2, dans lequel le procédé comporte une étape de renvoi d'une erreur si la mise à jour de paramètres de service n'a pas été réalisée et si le terminal mobile (14) n'a pas pu s'attacher au nouveau réseau (12).

4. Procédé selon l'une quelconque des revendications 1 à 3, dans lequel la demande d'attachement est une prise de décision en fonction de critères.

5. Procédé selon l'une quelconque des revendications 1 à 4, dans lequel un réseau de télécommunication (12) est un réseau choisi parmi un réseau LTE, un réseau 2G de type public, un réseau 3G de type public, un réseau 4G de type public, un réseau 2G de type privé, un réseau 3G de type privé et un réseau 4G de type privé.

6. Procédé selon l'une quelconque des revendications 1 à 5, dans lequel le procédé comporte une étape de mesure de qualité de service par le contrôleur (20).

7. Procédé selon l'une quelconque des revendications 1 à 6, dans lequel le dispositif d'attachement (18) est une carte SIM et le contrôleur (20) est une application mobile.

8. Procédé selon l'une quelconque des revendications 1 à 7, dans lequel le dispositif d'attachement (18) est une carte SIM de type eUICC configurée avec plusieurs profils réseau eUSIM indépendants, et disposant d'une interface de communication qui permet au contrôleur (20) de déclencher un changement de profil réseau (PR) par échange de commandes avec le dispositif d'attachement (18).

9. Procédé selon l'une quelconque des revendications 1 à 8, dans lequel l'infrastructure de télécommunication (10) comporte un dispositif de gestion (22) gérant l'accès aux réseaux (12) par des profils réseau (PR) autorisés pour chaque dispositif d'attachement (18) et les profils de services applicables à chaque profil de réseau (PR) considéré et communiquant avec le contrôleur (20), la gestion pouvant être asynchrone, le dispositif de gestion (22) fonctionnant indépendamment des opérateurs de réseau de télécommunication.

10. Procédé selon la revendication 9, dans lequel le contrôleur (20) est apte à fonctionner localement au terminal mobile (14), c'est-à-dire même en l'absence temporaire de connexion avec le dispositif de gestion (22).

11. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé selon l'une quelconque des revendications 1 à 10.

12. Support lisible d'informations mémorisant un programme d'ordinateur comprenant des instructions de programme, le programme d'ordinateur étant chargeable sur une unité de traitement de données et adapté pour entraîner la mise en oeuvre d'un procédé selon l'une quelconque des revendications 1 à 10 lorsque le programme d'ordinateur est mis en oeuvre sur l'unité de traitement des données.

13. Infrastructure de télécommunication (10) comprenant :
- des réseaux de télécommunication (12), au moins un réseau (12_{A}) étant un réseau public et au moins un réseau (12_{B}) étant un réseau privé, et
- un terminal mobile (14) comportant un dispositif d'attachement (18) et un contrôleur (20), le terminal mobile (14) étant propre à s'attacher à chaque réseau (12) selon un profil spécifique, les profils réseau spécifiques étant mémorisés dans le dispositif d'attachement (18), un profil de services étant associé à chaque dispositif d'attachement (18) et à chaque profil réseau (PR_{A}, PR_{B}),
l'infrastructure de télécommunication (10) étant adaptée à mettre en oeuvre un procédé de gestion des accès à l'infrastructure de télécommunication (10), le procédé comportant au moins l'étape de :
- demande d'attachement du terminal mobile (14) à un deuxième réseau (12_{B}) distinct du premier réseau (12_{A}) auquel le terminal mobile (14) est attaché selon un premier profil réseau (PR_{A}),
- désactivation du premier profil réseau (PR_{A}) par le contrôleur (20),
- sélection du deuxième profil réseau (PR_{B}) par le contrôleur (20),
- attachement au deuxième réseau (12_{B}),
- demande de mise à jour du profil de services associé au deuxième profil réseau (PR_{B}), et
- test de la réalisation de la mise à jour du profil de services associé au deuxième profil réseau (PR_{B}), le terminal mobile (14) restant attaché au deuxième réseau (12_{B}) avec le profil de services du deuxième réseau (12_{B}) si l'attachement au deuxième réseau (12_{B}) et la mise à jour ont été réalisés et le terminal mobile (14) s'attachant au premier réseau (12_{A}) avec le profil de services du premier réseau (12_{A}) si l'attachement au deuxième réseau (12_{B}) et la mise à jour n'ont pas été réalisés.
